(19) Europäisches Patentamt

European Patent Office

Office européen des brevets

(11) **EP 4 696 573 A1**

(12) **EUROPEAN PATENT APPLICATION**

(43) Date of publication:
**18.02.2026 Bulletin 2026/08**

(21) Application number: **24194783.7**

(22) Date of filing: **15.08.2024**

(51) International Patent Classification (IPC):
**B60W 30/045** (2012.01)   **B60W 30/18** (2012.01)
**B60W 40/103** (2012.01)   **B62D 7/15** (2006.01)

(52) Cooperative Patent Classification (CPC):
**B60W 30/045; B60W 30/18145; B60W 40/103;
B62D 6/006; B62D 7/159;** B60W 2040/1315;
B60W 2050/0033; B60W 2520/10; B60W 2520/14;
B60W 2520/20; B60W 2520/26; B60W 2530/20;
B60W 2552/40; B60W 2710/207; B60W 2720/26

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Volvo Truck Corporation
405 08 Göteborg (SE)**

(72) Inventors:
• **LAINE, Leo
414 84 GÖTEBORG (SE)**
• **PERSSON, Jonas
412 58 GÖTEBORG (SE)**

(74) Representative: **Ström & Gulliksson AB
P.O. Box 4188
203 13 Malmö (SE)**

(54) **LONGITUDINAL SLIP CONTROL FOR STEERED AXLES OF A VEHICLE**

(57)   A computer system and computer-implemented method for determining a longitudinal slip limit for a steered axle of a vehicle having two steered axles are disclosed. The computer system comprises processing circuitry configured to: acquire a reference body slip for a steered axle of the vehicle; acquire a current body slip for the steered axle; determine a first difference between the reference body slip and the current body slip; acquire an initial longitudinal slip limit for the steered axle; and determine an adjusted longitudinal slip limit for the steered axle based on the first difference and the initial longitudinal slip limit for the steered axle.

**FIG. 1**

**Description**

**TECHNICAL FIELD**

The disclosure relates generally to vehicle control. In particular aspects, the disclosure relates to longitudinal slip control for steered axles of a vehicle. The disclosure can be applied to heavy-duty vehicles, such as trucks, and buses, among other vehicle types. The disclosure can be applied in construction equipment and vehicles, such as excavators, loaders, articulated haulers. Although the disclosure may be described with respect to a particular vehicle, the disclosure is not restricted to any particular vehicle.

**BACKGROUND**

When controlling motion of vehicles with multiple steered axles, the steering and propulsion between axles must be coordinated to ensure safe and correct manoeuvring of the vehicle. Current approaches to multi-axle steering are often quite rudimentary, involving simple counter-steering of one axle relative to the other. For example, a rear steered axle may be provided with a steering angle that is proportional but opposite to that of a front steered axle. In other approaches, a rear steered axle may only be used for translational lateral movement, rather than used in a comprehensive steering strategy for diverse driving scenarios.

These approaches can lead to instability at high speeds or on lower friction surfaces. This is particularly relevant when operating construction vehicles such as excavators, loaders, articulated haulers, and the like in such scenarios. Operation of such vehicles may therefore be unsafe when employing approaches known in the art, for example when cornering at high speed (relative for construction equipment, around 30 km/h) and/or in low friction scenarios. The freedom of movement of the vehicle is therefore limited.

It is therefore desired to develop a solution for vehicle motion management that addresses or at least mitigates some of these issues.

**SUMMARY**

This disclosure provides systems, methods and other approaches for determining a longitudinal slip limit for a steered axle of a vehicle having two steered axles. In particular, a difference is determined between a reference body slip and a current body slip for a steered axle. An initial longitudinal slip limit for the steered axle is acquired. Based on the determined difference and the initial longitudinal slip limit, an adjusted longitudinal slip limit for the steered axle is determined. The adjusted longitudinal slip limit can then be used in motion control of the vehicle. By determining longitudinal slip limits for the steered axles in this way, i.e. taking into account target body slips for the axles, it can be ensured that longitudinal slip is limited as body slip and/or path curvature increases. This means that lateral forces required for a particular manoeuvre can be achieved, which ensures that manoeuvres with lateral motion, such as cornering, can be performed more safely due to increased lateral traction. This is particularly advantageous at relatively high speeds (e.g. 30 km/h for construction equipment, but typically different based on vehicle types) and offers an improved control strategy for autonomously controlled vehicles, but also offers benefits relating to non- or semi-autonomously controlled vehicles.

According to a first aspect of the disclosure, there is provided a computer system for determining a longitudinal slip limit for a steered axle of a vehicle having two steered axles, the computer system comprising processing circuitry configured to: acquire a reference body slip for a steered axle of the vehicle; acquire a current body slip for the steered axle; determine a first difference between the reference body slip and the current body slip; acquire an initial longitudinal slip limit for the steered axle; and determine an adjusted longitudinal slip limit for the steered axle based on the first difference and the initial longitudinal slip limit for the steered axle.

The first aspect of the disclosure may seek to ensure that longitudinal slip of the steered axles is limited as body slip and/or path curvature increases by taking into account target body slips when determining longitudinal slip limits for the steered axles. In this way, in situations where lateral force is not as high as required (i.e. high body slip), less force is applied longitudinally. Indeed, the more the current body slip on a steered axle deviates from a target body slip, the more aggressively the longitudinal slip limit of that axle is limited. This means that lateral forces required for a particular manoeuvre can be achieved, which ensures that manoeuvres with lateral motion, such as cornering, can be performed more safely due to increased lateral traction. This is particularly advantageous at high speeds and offers an improved control strategy for autonomously controlled vehicles, but also offers benefits relating to non- or semi-autonomously controlled vehicles.

Optionally in some examples, including in at least one preferred example, the steered axle is a front steered axle or a rear steered axle of the vehicle. A technical benefit may include that a vehicle having two steered axles may be controlled in an improved manner via either of its steered axles, enabling both oversteer and understeer scenarios to be addressed.

Optionally in some examples, including in at least one preferred example, the processing circuitry is configured to acquire the reference body slip for the steered axle by determining a reference body slip for the vehicle using a bicycle model. A technical benefit may include that desired motion, for example stable, safe, and efficient motion, of the vehicle can be taken into account when determining the reference body slip for the steered axle.

Optionally in some examples, including in at least one preferred example, the processing circuitry is configured to acquire the reference body slip for a steered axle according to:

$$\beta_{ref,f/r} = \beta_{ref} + \frac{L_{f/r}\omega_z}{v_x}$$

where $\beta_{ref,f}$ is the reference body slip for the front steered axle, $\beta_{ref,r}$ is the reference body slip for the rear steered axle, $\beta_{ref}$ is the reference body slip for the vehicle, $L_f$ is the distance from the centre of gravity of the vehicle to the front steered axle, $L_r$ is the distance from the centre of gravity of the vehicle to the rear steered axle, $\omega_z$ is the yaw rate of the vehicle, and $v_x$ is the longitudinal velocity of the vehicle. A technical benefit may include that an accurate and up-to-date value of the reference body slip for a steered axle is used to determine the longitudinal slip limit.

Optionally in some examples, including in at least one preferred example, the processing circuitry is configured to acquire the current body slip for the steered axle based on a current body slip for the vehicle, a distance from the centre of gravity of the vehicle to the steered axle, a current yaw rate of the vehicle, and a current longitudinal velocity of the vehicle. A technical benefit may include that an accurate and up-to-date value of the current body slip for a steered axle is used to determine the longitudinal slip limit.

Optionally in some examples, including in at least one preferred example, the initial longitudinal slip limit for the steered axle is based on a surface friction and/or one or more tyre properties of the steered axle. A technical benefit may include that the initial longitudinal slip limit can be set based on relevant parameters of the vehicle and its motion.

Optionally in some examples, including in at least one preferred example, the processing circuitry is configured to determine the adjusted longitudinal slip limit for the steered axle based on a second difference between the initial longitudinal slip limit and a multiple of the magnitude of the first difference. A technical benefit may include that the longitudinal slip limit is limited more aggressively the more the current body slip on the steered axle deviates from the target body slip.

Optionally in some examples, including in at least one preferred example, the processing circuitry is configured to determine a maximum adjusted longitudinal slip limit for the steered axle based on a second difference between a maximum initial longitudinal slip limit and a multiple of the magnitude of the first difference. A technical benefit may include that that longitudinal slip of the steered axles can be limited appropriately during propulsion.

Optionally in some examples, including in at least one preferred example, the processing circuitry is configured to determine a minimum adjusted longitudinal slip limit for the steered axle based on a second difference between a minimum initial longitudinal slip limit and a multiple of the magnitude of the first difference. A technical benefit may include that that longitudinal slip of the steered axles can be limited appropriately during braking.

Optionally in some examples, including in at least one preferred example, the processing circuitry is configured to transmit the adjusted longitudinal slip limit to a controller of the vehicle for use in controlling one or more motion parameters of at least one steered axle of the vehicle, such that an implemented longitudinal slip adheres to the adjusted longitudinal slip limit. A technical benefit may include that the vehicle may be controlled using existing control interfaces to ensure that longitudinal slip of the steered axles is limited as body slip and/or path curvature increases. This ensures that manoeuvres with lateral motion, such as cornering, can be performed more safely due to increased lateral traction.

Optionally in some examples, including in at least one preferred example, the one or more motion parameters of the steered axle comprise a torque, a force, a longitudinal slip, and/or a steering angle of the steered axle. A technical benefit may include that the vehicle may be controlled using existing control interfaces to ensure that longitudinal slip of the steered axles is limited as body slip and/or path curvature increases. This ensures that manoeuvres with lateral motion, such as cornering, can be performed more safely due to increased lateral traction.

According to a second aspect of the disclosure, there is provided a vehicle comprising the computer system of the first aspect. The second aspect of the disclosure may seek to provide a vehicle capable of being controlled such longitudinal slip of the steered axles is limited as body slip and/or path curvature increases, as target body slips are taken into account when determining longitudinal slip limits for the steered axles. This means that lateral forces required for a particular manoeuvre can be achieved, which ensures that manoeuvres with lateral motion, such as cornering, can be performed more safely due to increased lateral traction.

According to a third aspect of the disclosure, there is provided a computer-implemented method for determining a longitudinal slip limit for a steered axle of a vehicle having two steered axles, the computer-implemented method comprising: acquiring, by processing circuitry of a computer system, a reference body slip for a steered axle of the vehicle; acquiring, by the processing circuitry, a current body slip for the steered axle; determining, by the processing circuitry, a first difference between the reference body slip and the current body slip; acquiring, by the processing circuitry, an initial longitudinal slip limit for the steered axle; and determining, by the processing circuitry, an adjusted longitudinal slip limit for the steered axle based on the first difference and the initial longitudinal slip limit for the steered axle.

The third aspect of the disclosure may seek to ensure that longitudinal slip of the steered axles is limited as body slip and/or path curvature increases by taking into account target body slips when determining longitudinal slip limits for the steered axles. In this way, in situations where lateral force is not as high as required (i.e. high body slip), less force is applied longitudinally. Indeed, the more the current body slip on a steered axle deviates from a target body slip, the more aggressively the longitudinal slip limit of that axle is limited. This means that lateral forces required for a particular manoeuvre can be achieved, which ensures that manoeuvres with lateral motion, such as cornering, can be performed more safely due to increased lateral traction. This is particularly advantageous at high speeds and offers an improved control strategy for autonomously controlled vehicles, but also offers benefits relating to non- or semi-autonomously controlled vehicles.

According to a fourth aspect of the disclosure, there is provided a computer program product comprising program code for performing, when executed by processing circuitry, the computer-implemented method of the third aspect. The fourth aspect of the disclosure may seek to enable new vehicles and/or legacy vehicles to be conveniently configured, by software installation/update, to limit longitudinal slip of the steered axles as body slip and/or path curvature increases, as target body slips are taken into account when determining longitudinal slip limits for the steered axles. This means that lateral forces required for a particular manoeuvre can be achieved, which ensures that manoeuvres with lateral motion, such as cornering, can be performed more safely due to increased lateral traction.

According to a fifth aspect of the disclosure, there is provided a non-transitory computer-readable storage medium comprising instructions, which when executed by processing circuitry, cause the processing circuitry to perform the computer-implemented method of the third aspect. The fifth aspect of the disclosure may seek to enable new vehicles and/or legacy vehicles to be conveniently configured, by software installation/update, to limit longitudinal slip of the steered axles as body slip and/or path curvature increases, as target body slips are taken into account when determining longitudinal slip limits for the steered axles. This means that lateral forces required for a particular manoeuvre can be achieved, which ensures that manoeuvres with lateral motion, such as cornering, can be performed more safely due to increased lateral traction.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

Examples are described in more detail below with reference to the appended drawings.

FIG. 1 schematically shows a vehicle having two steered axles according to an example.
FIG. 2 is a plot of safe limits of longitudinal slip against a difference between current and reference body slips for a steered axle according to an example.
FIG. 3 is a flow chart of a computer-implemented method according to an example.
FIG. 4 is a schematic diagram of a computer system for implementing examples disclosed herein.

Like reference numerals refer to like elements throughout the description.

## DETAILED DESCRIPTION

The detailed description set forth below provides information and examples of the disclosed technology with sufficient detail to enable those skilled in the art to practice the disclosure.

When controlling motion of vehicles with multiple steered axles, the steering between axles must be coordinated to ensure safe and correct manoeuvring of the vehicle. Current approaches to multi-axle steering are often quite rudimentary and can lead to instability at high speeds or on lower friction surfaces. This is particularly relevant when operating construction vehicles such as excavators, loaders, articulated haulers scenarios, and the like in such. Operation of such vehicles may therefore be unsafe when employing approaches known in the art, for example when cornering at high speed (relative for construction equipment, around 30 km/h) and/or in low friction scenarios.

To remedy this, systems, methods and other approaches are provided herein for determining a longitudinal slip limit for a steered axle of a vehicle having two steered axles. In particular, a difference is determined between a reference body slip and a current body slip for a steered axle. An initial longitudinal slip limit for the steered axle is acquired. Based on the determined difference and the initial longitudinal slip limit, an adjusted longitudinal slip limit for the steered axle is determined. The adjusted longitudinal slip limit can then be used in motion control of the vehicle. By determining longitudinal slip limits for the steered axles in this way, i.e. taking into account target body slips for the axles, it can be ensured that longitudinal slip is limited as body slip and/or path curvature increases. This means that lateral forces required for a particular manoeuvre can be achieved, which ensures that manoeuvres with lateral motion, such as cornering, can be performed more safely due to increased lateral traction. This is particularly advantageous at high speeds and offers an improved control strategy for autonomously controlled vehicles, but also offers benefits relating to non- or semi-autonomously controlled vehicles.

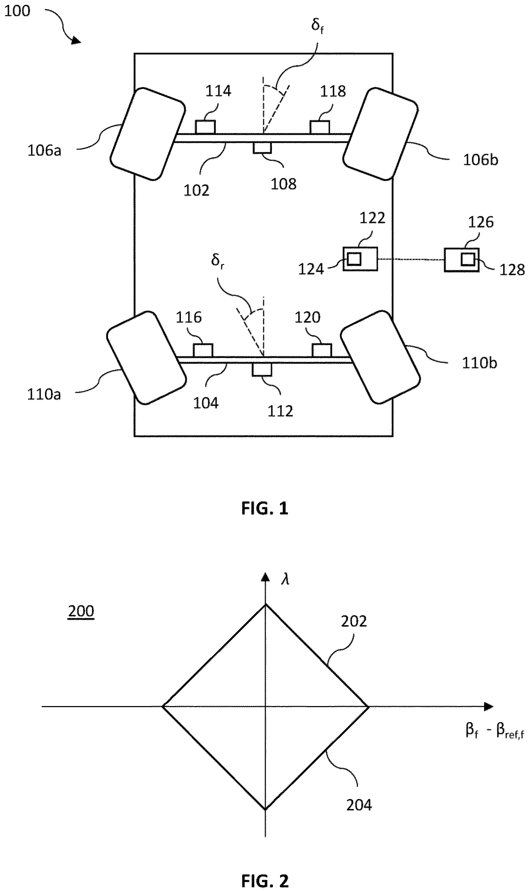

**FIG. 1** schematically shows a vehicle **100** having two steered axles **102, 104.** The front steered axle **102** has respective left and right wheels **106a, 106b.** A steering angle $\delta_f$ of the front steered axle **102** and its wheels **106a, 106b** is controlled by a front steering actuator **108.** The rear steered axle **104** has respective left and right wheels **110a, 110b.** A steering angle $\delta_r$ of the rear steered axle **104** and its wheels **110a, 110b** is controlled by a rear steering actuator **112.** The vehicle **100** may be any suitable vehicle known in the art having two steered axles (each axle including any suitable number of wheels), including heavy-duty vehicles, such as trucks, and buses, among other vehicle types. In some examples, the vehicle **100** may be a construction vehicle, for example any vehicle suitable for transporting bulk material from one location to another. For example, the vehicle **100** may be an excavator, loader, articulated hauler, dump truck, or any other suitable construction vehicle known in the art. Whilst two steered axles **102, 104** are shown, it will be appreciated that further non-steered axles may be provided on the vehicle **100** as appropriate.

The vehicle **100** may also comprise one or more propulsion systems **114, 116** configured to drive, e.g. provide torque and/or steering to, one or more axles **102, 104** or individual wheels **106, 110** of the vehicle **100.** The propulsion systems **114, 116** may include one or more electrical machines such as electric motors, which may be able to supply either a positive (propulsion) or negative (braking) force or torque. In the example of **FIG. 1,** each steered axle **102, 104** has a respective propulsion system **114, 116.** As such, the steered axles **102, 104** are both driven axles. It will also be appreciated that any number of the steered axles **102, 104** and/or further axles may be driven axles. For example, in some implementations, only one of the steered axles **102, 104** may be driven. In some examples, a third axle (not shown) may be a driven axle while the steered axles **102, 104** are not driven. In some examples, the individual wheels **106, 110** may have respective propulsion systems. In some examples, the vehicle **100** may also include another source of propulsion, for example an internal combustion engine (ICE). The vehicle **100** also comprises a drivetrain (not shown) to deliver mechanical power from the propulsion source (the electrical machines or the ICE) to the wheels **106, 110.**

The vehicle **100** may also comprise one or more brake systems **118, 120,** for example one or more sets of service brakes, configured to supply a negative (braking) force. The service brakes may be, for example, frictional brakes such as pneumatic brakes. The steering actuators **108, 112,** propulsion systems **114, 116,** and brake systems **118, 120** may be collectively referred to as motions support devices (MSDs) of the vehicle **100.**

In some examples, the vehicle **100** may be controlled (driven) by an on-board operator (driver). For example, the operator may provide an input to a steering wheel and/or accelerator/brake pedal of the vehicle **100** related to a manoeuvre, for example indicating a desired change of direction and/or speed of the vehicle **100.** In other examples, the vehicle **100** may be an autonomous vehicle that is controlled by a vehicle motion management (VMM) unit **122** comprising processing circuitry **124** configured to control motion of the vehicle **100** via the MSDs of the vehicle **100.** In some examples, the vehicle **100** may be capable of being controlled by an on-board or remote operator and/or the VMM unit **122,** in what may be termed a semi-autonomous driving scenario.

The VMM unit **122** may be configured to provide control signals to each of the MSDs of the vehicle **100.** To this end, the VMM unit **122** may be communicatively coupled to the steering actuators **108, 112,** propulsion systems **114, 116,** and/or brake systems **118, 120.** In some examples, the VMM unit **122** may be configured to provide a force, torque, and or longitudinal slip request to one or more of the propulsion systems **114, 116** and/or brake systems **118, 120,** and/or a steering angle request to one or more of the steering actuators **108, 112.** In a common driving scenario, a steering angle request may involve simple counter-steering of the steered axles **102, 104,** where a requested steering angle for the rear steered axle **104** is proportional (for example equal) but opposite to that of the front steered axle **102. FIG. 1** shows a single VMM unit **122** for all MSDs of the vehicle **100,** however it will be appreciated that each MSD may comprise a dedicated controller. The VMM unit **122** may be a microcontroller.

In some examples, the VMM unit **122** may determine the control signals itself, for example based on a predetermined mission plan or based on an input from an on-board operator. In some examples, the VMM unit **122** may receive control signals from a computer system **126** comprising processing circuitry **128.** The computer system **126** is communicatively coupled to the VMM unit **122.** The computer system **126** may be a vehicle control unit configured to perform various vehicle control functions, such as vehicle motion management. The computer system **126** may be local to the vehicle **100,** or may be a remote system, implemented at a distance from the vehicle **100,** e.g. a cloud server for remote control of the vehicle **100.**

A communicative coupling as referred to above may be implemented in any suitable way, for example via a circuit or any other wired, wireless, or network connection known in the art. Furthermore, a communicative coupling may be implemented as a direct connection, e.g. between the VMM unit **122** and the computer system **126,** or as a connection via one or more intermediate entities.

One function of the VMM unit **122** and the computer system **126** is to provide control inputs for the MSDs of the vehicle **100** to enable motion of the vehicle **100,** for example including straight-line driving, cornering, braking and the like. The implemented motion should be safe, stable, and enable sufficient freedom of movement of the vehicle **100.** To this end, a number of principles of motion for the vehicle **100** can be considered.

When the vehicle **100** is in motion, the wheels **106, 110** of the vehicle **100** experience slip. This can be considered in terms of body slip or slip angle. The body slip of the vehicle **100** is the angular difference between the direction the vehicle **100** is travelling and the direction that the body of the vehicle **100** is pointing, and may be defined as the ratio between the lateral velocity $v_y$ and the longitudinal velocity $v_x$ of the vehicle **100.** Body slip can also be considered as the body slip on each of the steered axles **102, 104.** As the steered axles **102, 104** may have different lateral velocities, they may have different values of body slip. The slip angle refers to an individual wheel **106, 110** and is the difference between the direction the wheel **106, 110** is travelling and the direction it is pointing. Slip can be divided into longitudinal and lateral slip. These parameters are known in the art, and not discussed in detail here. By considering the slip on the vehicle **100** as a whole as well as on the individual steered axles **102, 104,** various slip limits can be determined that can be used when determining control inputs for the steered axles **102, 104.**

The current rate of change of body slip $\dot{\beta}$ on the vehicle **100** as a whole can be given by a bicycle model defined as follows:

$$\dot{\beta} = -\frac{C_{f\alpha} + C_{r\alpha}}{m \cdot v_x}\beta + \left(\frac{-L_f \cdot C_{f\alpha} + L_r \cdot C_{r\alpha}}{m \cdot v_x{}^2} - 1\right)\omega_z + \frac{C_{f\alpha}}{mv_x}\delta_f + \frac{C_{r\alpha}}{mv_x}\delta_r \qquad (1)$$

where $C_{f\alpha}$ is the cornering stiffness of the front steered axle **102,** $C_{r\alpha}$ is the cornering stiffness of the rear steered axle **104,** $m$ is the mass of the vehicle **100,** $v_x$ is the longitudinal velocity of the vehicle **100,** $\beta$ is the body slip on the vehicle **100,** $L_f$ is the distance from the centre of gravity (CoG) of the vehicle **100** to the front steered axle **102,** $L_r$ is the distance from the centre of gravity (CoG) of the vehicle **100** to the rear steered axle **104,** and $\omega_z$ is the yaw rate of the vehicle **100.** The cornering stiffnesses $C_{f\alpha}$, $C_{r\alpha}$ may be determined from tyre properties of the steered axles **102, 104** as known in the art. The longitudinal velocity $v_x$ of the vehicle **100** may be determined in any suitable manner known in the art, for example using speed sensors of the vehicle **100.** The yaw rate $\omega_z$ of the vehicle **100** may be determined in any suitable manner known in the art, for example using one or more yaw sensors and/or inertial measurement units (IMUs) of the vehicle **100.**

The bicycle model defined in equation (1) gives the change in body slip per second $\dot{\beta}$, and can be used to determine an expected body slip $\beta_{ref}$ on the vehicle **100** as a whole for a desired value of the rate of change $\dot{\beta}$. For example, for a steady state, the rate of change of body slip $\dot{\beta}$ will be zero. For a given yaw rate $\omega_z$, longitudinal velocity $v_x$, and front and rear steering angles $\delta_f$, $\delta_r$, an expected body slip $\beta_{ref}$ on the vehicle **100** can be determined for the steady state based on equation (1).

This value can then be converted into an expected body slip $\beta_{ref,f}$ of the front steered axle 102 and an expected body slip $\beta_{ref,r}$ of the rear steered axle **104.** To determine the expected body slip $\beta_{ref,f}$ of the front steered axle **102,** equation (2) can be used as follows:

$$\beta_{ref,f} = \beta_{ref} + \frac{L_f\omega_z}{v_x} \qquad (2)$$

To determine the expected body slip $\beta_{ref,r}$ of the rear steered axle **104,** equation (3) can be used as follows:

$$\beta_{ref,r} = \beta_{ref} + \frac{L_r\omega_z}{v_x} \qquad (3)$$

This provides respective expected body slip values $\beta_{ref,f}$, $\beta_{ref,r}$ for the steered axles **102, 104** for a given yaw rate $\omega_z$, longitudinal velocity $v_x$, and front and rear steering angles $\delta_f$, $\delta_r$.

The relationship between body slip and longitudinal slip is important to stability of the vehicle **100.** Since there are two steered axles **102, 104,** the current body slip $\beta$ is a direct measurement of how the vehicle **100** moves. **FIG. 2** is a plot **200** of the safe limits of longitudinal slip $\lambda$ for the front steered axle **102** of the vehicle **100** on the y-axis against a difference between a current body slip $\beta_f$ of the front steered axle **102** and the reference (expected) body slip $\beta_{ref,f}$ for the front steered axle **102** on the x-axis. A similar plot could be produced for the rear steered axle **104**. In general, the negative x-axis indicates that the current body slip for the axle **102, 104** is lower than expected, while the positive x-axis indicates that the current body slip for the axle **102, 104** is higher than expected. The line **202** on the plot **200** indicates the maximum positive longitudinal slip $\lambda_{max}$ for a given difference in body slip to ensure safe vehicle operation and may apply to a propulsion scenario. The line **204** on the plot **200** indicates the maximum negative longitudinal slip $\lambda_{min}$ for a given difference in body slip to ensure safe vehicle operation and may apply to a braking scenario. The larger the difference between current and expected body slip, the more the longitudinal slip should be limited.

When considering the front steered axle **102**, as in **FIG. 2**, the negative x-axis (where the current body slip $\beta_f$ for the front steered axle **102** is lower than expected, i.e. $\beta_f < \beta_{ref,f}$) indicates understeer. This occurs when the yaw rate $\omega_z$ of the vehicle **100** is lower than expected, for example when the front steered axle **102** does not rotate into the curve being travelled by the vehicle **100** (its body slip $\beta_f$ is not increasing as much as expected). In this case, the front wheels **106** have less grip than they need, and the lateral velocity $v_y$ of the front steered axle **102** is lower than expected. To remedy this, the magnitude of the longitudinal slip $\lambda$ of the front steered axle **102** can be limited. As discussed above, the magnitude of the longitudinal slip $\lambda$ of (the wheels of) the front steered axle **102** should be limited more strictly as the magnitude of the difference between the current body slip $\beta_f$ and the reference (expected) body slip $\beta_{ref,f}$ for the front steered axle **102** increases.

When considering the rear steered axle **104**, the positive x-axis (where the current body slip $\beta_r$ for the rear steered axle **104** is higher than expected, i.e. $\beta_r > \beta_{ref,r}$) indicates oversteer. This may occur when the rear steered axle **104** rotates out of the curve being travelled by the vehicle **100** (its body slip $\beta_r$ is increasing more than expected). In this case, the rear wheels **110** have less grip than they need. To remedy this, the magnitude of the longitudinal slip $\lambda$ of the rear steered axle **104** can be limited. As discussed above, the magnitude of the longitudinal slip $\lambda$ of (the wheels of) the rear steered axle **104** should be limited more strictly as the magnitude of the difference between the current body slip $\beta_r$ and the reference (expected) body slip $\beta_{ref,r}$ for the rear steered axle **104** increases.

Based on these behaviours, longitudinal slip limits $\lambda_{max/min}$ can be determined for (the wheels of) the steered axles **102, 104** of the vehicle **100**, which allows corresponding control inputs, such as force, torque, longitudinal slip, and/or steering angle, to be determined that provide safe motion of the vehicle **100**.

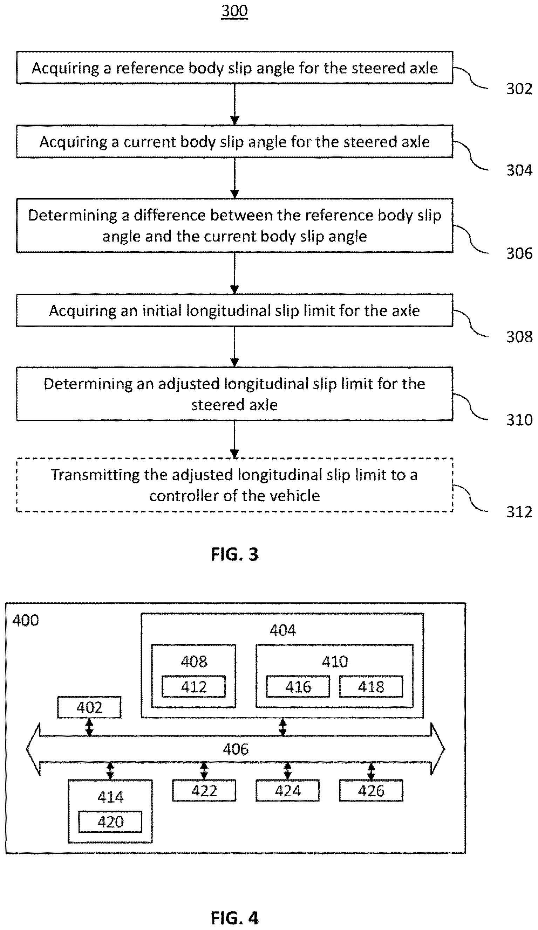

**FIG. 3** is a flow chart of a computer-implemented method **300** according to an example. The method **300** is for determining a longitudinal slip limit for a steered axle of a vehicle having two steered axles, such as the vehicle **100**. The method **300** enables longitudinal slip to be limited as body slip and/or path curvature increases, meaning that lateral forces required for a particular manoeuvre can be achieved. This ensures that manoeuvres with lateral motion, such as cornering, can be performed more safely due to increased lateral traction. The method **300** may be implemented by processing circuitry of a computer system (e.g., the processing circuitry **124** of the VMM unit **122**, or the processing circuitry **128** of the computer system **126** described in relation to **FIG. 1**). Since the front steered axle **102** and the rear steered axle **104** will have different lateral velocities, they will have different amounts of body slip. Therefore, longitudinal slip limits for the steered axles **102, 104** can be set separately.

At **302**, a reference (target) body slip for a steered axle **102, 104** is acquired. For example, a reference (target) body slip $\beta_{ref,f}$ for the front steered axle **102** may be acquired. In particular, a bicycle model such as that of equation (1) may be used to determine a reference body slip $\beta_{ref}$ for the vehicle **100**, from which the reference body slip $\beta_{ref,f}$ for the front steered axle **102** may be derived, for example using equation (2). The reference body slip $\beta_{ref}$ for the vehicle **100** and/or the reference body slip $\beta_{ref,f}$ for the front steered axle **102** may be determined in advance and stored in a memory associated with the vehicle **100**, for example associated with the VMM unit **122** or the computer system **126**.

Additionally or alternatively at **302**, a reference (target) body slip $\beta_{ref,r}$ for the rear steered axle **104** may be acquired. In particular, a bicycle model such as that of equation (1) may be used to determine a reference body slip $\beta_{ref}$ for the vehicle **100**, from which the reference body slip $\beta_{ref,r}$ for the rear steered axle **104** may be derived, for example using equation (3). The reference body slip $\beta_{ref}$ for the vehicle **100** and/or the reference body slip $\beta_{ref,r}$ for the rear steered axle **104** may be determined in advance and stored in a memory associated with the vehicle **100**, for example associated with the VMM unit **122** or the computer system **126**.

At **304**, a current body slip for the steered axle **102, 104** is acquired. For example, a current body slip $\beta_f$ for the front steered axle **102** is acquired. This may be acquired in any suitable manner known in the art, for example using radar, IMU or laser measurements. In one example, the current body slip $\beta_f$ for the front steered axle **102** can be acquired based on the current body slip $\beta$ for the vehicle **100**, the distance $L_f$ from the centre of gravity of the vehicle **100** to the front steered axle **102**, a yaw rate $\omega_z$ of the vehicle **100**, and a longitudinal velocity $v_x$ of the vehicle **100**. In particular, the current body slip $\beta_f$ for the front steered axle **102** may be determined in a similar manner to equation (2), as follows:

$$\beta_f = \beta + \frac{L_f \omega_z}{v_x} \qquad (4)$$

The current body slip $\beta$ for the vehicle **100** may be acquired in any suitable manner known in the art, for example by determining the ratio between the lateral velocity $v_y$ and the longitudinal velocity $v_x$ using sensor or state estimation measurements, or by using inverse tyre models. The yaw rate $\omega_z$ and longitudinal velocity $v_x$ of the vehicle **100** may be determined in any suitable manner known in the art, as discussed above.

Additionally or alternatively at **304,** a current body slip $\beta_r$ for the rear steered axle **104** may be acquired. This may be acquired in any suitable manner known in the art, for example using radar, IMU or laser measurements. It will be appreciated that the current body slip $\beta_r$ for the rear steered axle **104** can be determined in a similar manner to equation (3), using the current body slip $\beta$ for the vehicle **100** instead of the expected body slip $\beta_{ref,r}$. In particular, the current body slip $\beta_r$ for the rear steered axle **104** can be determined in a similar manner to equation (4), but using the distance $L_r$ from the CoG of the vehicle **100** to the rear steered axle **104** instead of the distance $L_f$ from the CoG of the vehicle **100** to the front steered axle **102.**

At **306,** a difference between the reference body slip acquired at **302** and the current body slip acquired at **304** is determined for the steered axle **102, 104.** As discussed above, for the front steered axle **102,** this difference may indicate that the vehicle **100** is understeering, and for the rear steered axle **104** the difference may indicate that the vehicle **100** is oversteering. As such, the difference, in particular the magnitude of the difference, is indicative of a safe level of longitudinal slip.

At **308,** an initial longitudinal slip limit for (the wheels of) the steered axle **102, 104** is acquired. This may include a maximum initial longitudinal slip limit $\lambda_{max,in}$ and a minimum initial longitudinal slip limit $\lambda_{min,in}$. It should be noted that the minimum initial longitudinal slip limit $\lambda_{min,in}$ is in fact a maximum negative value and may apply to a braking scenario. These values may be set based on tyre parameters associated with the steered axle. As known in the art, the maximum tyre force provided by a tyre occurs in a certain band of longitudinal slip (for example between 0.20 and 0.25). The exact values of optimal slip are dependent on various tyre parameters, such as tyre material, tyre tread shape, tyre size, and the like. They are also dependent on surface friction, which can be affected by weather conditions and the type of surface on which the vehicle is travelling (e.g. dry asphalt, wet asphalt, ice, snow, etc.). Other factors can be taken into account when setting these limits, for example an acceleration of the vehicle or an ABS trigger criteria.

At **310,** an adjusted longitudinal slip limit for (the wheels of) the steered axle **102, 104** is determined. This may include an adjusted maximum longitudinal slip limit $\lambda_{max}$ and/or an adjusted minimum longitudinal slip limit $\lambda_{min}$. Again, it should be noted that the adjusted minimum longitudinal slip limit $\lambda_{min}$ is in fact a maximum negative value and may apply to a braking scenario. The adjusted longitudinal slip limit(s) can be determined based on the initial longitudinal slip limit acquired at **308** and the magnitude of the difference determined at **306.** In particular, each adjusted longitudinal slip limit can be determined based on the respective initial longitudinal slip limit acquired at **308** and a multiple of the magnitude of the difference acquired at **306**

For the front steered axle **102,** these can be determined as follows:

$$\lambda_{max,f} = \lambda_{max,in,f} - \left| K\left(\beta_f - \beta_{ref,f}\right)\right| \tag{5}$$

$$\lambda_{min,f} = \lambda_{min,in,f} + \left| K\left(\beta_f - \beta_{ref,f}\right)\right| \tag{6}$$

where $\lambda_{max,f}$ is the adjusted maximum longitudinal slip limit for the front steered axle **102,** $\lambda_{max,in,f}$ is the maximum initial longitudinal slip limit for the front steered axle **102,** $\lambda_{min,f}$ is the adjusted minimum longitudinal slip limit for the front steered axle **102,** $\lambda_{min,in,f}$ is the minimum initial longitudinal slip limit for the front steered axle **102,** and K is a constant that may be a tuning parameter set accordingly by an operator.

Similar relations for the rear steered axle **104** can be expressed as follows:

$$\lambda_{max,r} = \lambda_{max,in,r} - \left| K\left(\beta_r - \beta_{ref,r}\right)\right| \tag{7}$$

$$\lambda_{min,r} = \lambda_{min,in,r} + \left| K\left(\beta_r - \beta_{ref,r}\right)\right| \tag{8}$$

where $\lambda_{max,r}$ is the adjusted maximum longitudinal slip limit for the rear steered axle **104,** $\lambda_{max,in,r}$ is the maximum initial longitudinal slip limit for the rear steered axle **104,** $\lambda_{min,r}$ is the adjusted minimum longitudinal slip limit for the rear steered axle **104,** and $\lambda_{min,in,r}$ is the minimum initial longitudinal slip limit for the rear steered axle **104.**

By determining longitudinal slip limits for (the wheels of) the steered axles **102, 104** in this way, i.e. taking into account target body slips for the axles **102, 104,** it can be ensured that longitudinal slip is limited as body slip and/or path curvature increases. This can be achieved by limiting the torque and/or force on the axle to adhere to the adjusted longitudinal slip limit. In this way, in situations where lateral force is not as high as required (i.e. high body slip), less force is applied longitudinally. Indeed, the more the current body slip on a steered axle **102, 104** deviates from a target body slip, the more aggressively the longitudinal slip limit of that axle is limited. This means that lateral forces required for a particular manoeuvre can be achieved, which ensures that manoeuvres with lateral motion, such as cornering, can be performed more safely due to increased lateral traction. This is particularly advantageous at high speeds and offers an improved control strategy for autonomously controlled vehicles, but also offers benefits relating to non- or semi-autonomously controlled vehicles.

Taking the understeer example discussed above, there is a difference between the current body slip $\beta_f$ and the reference (expected) body slip $\beta_{ref,f}$ for the front steered axle **102**. Therefore, the magnitudes of the adjusted longitudinal slip limits $\lambda_{max,f}$, $\lambda_{min,f}$ for (the wheels of) the front steered axle **102** are decreased with respect to the initial longitudinal slip limits $\lambda_{max,in,f}$, $\lambda_{min,in,f}$. Taking the oversteer example discussed above, there is a difference between the current body slip $\beta_r$ and the reference (expected) body slip $\beta_{ref,r}$ for the rear steered axle **104**. Therefore, the magnitudes of the adjusted longitudinal slip limits $\lambda_{max,r}$, $\lambda_{min,r}$ for (the wheels of) the rear steered axle **104** are decreased with respect to the initial longitudinal slip limits $\lambda_{max,in,r}$, $\lambda_{min,in,r}$.

At **312,** the adjusted longitudinal slip limit(s) may be transmitted to a controller of the vehicle **100** configured to control one or more motion parameters of the steered axle **102, 104**. For example, if the method **300** is performed at the computer system **126,** the adjusted longitudinal slip limit(s) may be transmitted to the VMM unit **122**. The adjusted longitudinal slip limit(s) may then be used in controlling one or more motion parameters of the steered axle to ensure that the implemented (e.g. experienced and/or measured) longitudinal slip of (the wheels of) the steered axle adheres to the determined limit(s). In particular, it is ensured that the implemented longitudinal slip of the steered axle is below the adjusted maximum longitudinal slip limit $\lambda_{max}$ and above the adjusted minimum longitudinal slip limit $\lambda_{min}$.

The motion parameters include a force, torque, and/or longitudinal slip (in the case of a driven axle), and/or a steering angle to be implemented at the steered axle. In the case that the individual wheels **106, 110** have respective propulsion systems, the wheels **106, 110** can operate with different forces or torques until the slip limits per wheel. This may be beneficial for torque vectoring, since an outer wheel will have better traction in a curve, which allows higher torque before a slip limit is reached. In some embodiments, the slip limits are the same for both wheels on a single axle. This can be implemented in a simple manner using existing control interfaces of the vehicle **100**. For example, electric motors that operate based on speed control have an internal controller that reduces the torque if the motor spins too fast. In this case, the speed of the motor can be limited.

FIG. 4 is a schematic diagram of a computer system **400** for implementing examples disclosed herein. The computer system **400** is adapted to execute instructions from a computer-readable medium to perform these and/or any of the functions or processing described herein. The computer system **400** may be connected (e.g., networked) to other machines in a LAN, an intranet, an extranet, or the Internet. While only a single device is illustrated, the computer system **400** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **400** may comprise at least one computing device or electronic device capable of including firmware, hardware, and/or executing software instructions to implement the functionality described herein. The computer system **400** may include processing circuitry **402** (e.g., processing circuitry including one or more processor devices or control units), a memory **404,** and a system bus **406**. The computer system **400** may include at least one computing device having the processing circuitry **402**. The system bus **406** provides an interface for system components including, but not limited to, the memory **404** and the processing circuitry **402**. The processing circuitry **402** may include any number of hardware components for conducting data or signal processing or for executing computer code stored in memory **404.** The processing circuitry **402** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus (with or without a memory controller), a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** (e.g., via a circuit or any other wired, wireless, or network connection) and may include computer code for executing one or more processes described herein. The memory **404** may include non-volatile memory **408** (e.g., read-only memory (ROM), erasable programmable read-only memory (EPROM), electrically erasable programmable read-only memory (EEPROM), etc.), and volatile memory **410** (e.g., random-access memory (RAM)), or any other medium which can be used to carry or store desired program code in the form of machine-executable instructions or data structures and which can be accessed by a computer or other machine with processing circuitry **402**. A basic input/output system (BIOS) **412** may be stored in the non-volatile memory **408** and can include the basic routines that help to transfer information between elements within the computer system **400**.

The computer system **400** may further include or be coupled to a non-transitory computer-readable storage medium such as the storage device **414,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **414** and/or in the volatile memory **410,** which may include an operating system **416** and/or one or more program modules **418**. All or a portion of the examples disclosed herein may be implemented as a computer program **420** stored on a transitory or non-transitory computer-usable or computer-readable storage medium (e.g., single medium or multiple media), such as the storage device **414,** which includes complex programming instructions (e.g., complex computer-readable program code) to cause the processing circuitry **402** to carry out actions described herein. Thus, the computer-readable program code of the computer program **420** can comprise software instructions for implementing the functionality of the examples described herein when executed by the processing circuitry **402**. In some examples, the storage device **414** may be a computer program product (e.g., readable storage medium) storing the computer program **420** thereon, where at least a portion of a computer program **420** may be loadable (e.g., into a processor) for implementing the functionality of the examples described herein when executed by the processing circuitry **402**. The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device interface **422** coupled to the system bus **406** but can be connected through other interfaces, such as a parallel port, an Institute of Electrical and Electronic Engineers (IEEE) 1394 serial port, a Universal Serial Bus (USB) port, an IR interface, and the like. The computer system **400** may include an output device interface **424** configured to forward output, such as to a display, a video display unit (e.g., a liquid crystal display (LCD) or a cathode ray tube (CRT)). The computer system **400** may include a communications interface **426** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

According to certain examples, there is also disclosed:

Example 1: A computer system (122, 126, 400) for determining a longitudinal slip limit for a steered axle (102, 104) of a vehicle (100) having two steered axles (102, 104), the computer system (122, 126, 400) comprising processing circuitry (124, 128, 402) configured to: acquire a reference body slip for a steered axle (102, 104) of the vehicle (100); acquire a current body slip for the steered axle (102, 104); determine a first difference between the reference body slip and the current body slip; acquire an initial longitudinal slip limit for the steered axle (102, 104); and determine an adjusted longitudinal slip limit for the steered axle (102, 104) based on the first difference and the initial longitudinal slip limit for the steered axle (102, 104).

Example 2: The computer system (122, 126, 400) of example 1, wherein the steered axle (102, 104) is a front steered axle (102) or a rear steered axle (104) of the vehicle (100).

Example 3: The computer system (122, 126, 400) of example 1 or 2, wherein the processing circuitry (124, 128, 402) is configured to acquire the reference body slip for the steered axle (102, 104) by determining a reference body slip for the vehicle (100) using a bicycle model.

Example 4: The computer system (122, 126, 400) of any preceding example, wherein the processing circuitry (124, 128, 402) is configured to acquire the reference body slip for a steered axle (102, 104) according to:

$$\beta_{ref,f/r} = \beta_{ref} + \frac{L_{f/r}\omega_z}{v_x}$$

where $\beta_{ref,f}$ is the reference body slip for the front steered axle (102), $\beta_{ref,r}$ is the reference body slip for the rear steered axle (104), $\beta_{ref}$ is the reference body slip for the vehicle (100), $L_f$ is the distance from the centre of gravity of the vehicle (100) to the front steered axle (102), $L_r$ is the distance from the centre of gravity of the vehicle (100) to the rear steered axle (104), $\omega_z$ is the yaw rate of the vehicle (100), and $v_x$ is the longitudinal velocity of the vehicle (100).

Example 5: The computer system (122, 126, 400) of any preceding example, wherein the processing circuitry (124, 128, 402) is configured to acquire the current body slip for the steered axle (102, 104) based on a current body slip for the vehicle (100), a distance from the centre of gravity of the vehicle (100) to the steered axle (102, 104), a current yaw rate of the vehicle (100), and a current longitudinal velocity of the vehicle (100).

Example 6: The computer system (122, 126, 400) of any preceding example, wherein the initial longitudinal slip limit for the steered axle (102, 104) is based on a surface friction and/or one or more tyre properties of the steered axle (102, 104).

Example 7: The computer system (122, 126, 400) of any preceding example, wherein the processing circuitry (124, 128, 402) is configured to determine the adjusted longitudinal slip limit for the steered axle (102, 104) based on a second difference between the initial longitudinal slip limit and a multiple of the magnitude of the first difference.

Example 8: The computer system (122, 126, 400) of example 7, wherein the processing circuitry (124, 128, 402) is configured to determine a maximum adjusted longitudinal slip limit for the steered axle (102, 104) based on a second difference between a maximum initial longitudinal slip limit and a multiple of the magnitude of the first difference.

Example 9: The computer system (122, 126, 400) of example 7 or 8, wherein the processing circuitry (124, 128, 402) is configured to determine a minimum adjusted longitudinal slip limit for the steered axle (102, 104) based on a second difference between a minimum initial longitudinal slip limit and a multiple of the magnitude of the first difference.

Example 10: The computer system (122, 126, 400) of any preceding example, wherein the processing circuitry (124, 128, 402) is configured to transmit the adjusted longitudinal slip limit to a controller (122, 126) of the vehicle (100) for use in controlling one or more motion parameters of at least one steered axle (102, 104) of the vehicle (100), such that an implemented longitudinal slip adheres to the adjusted longitudinal slip limit.

Example 11: The computer system (122, 126, 400) of example 10, wherein the one or more motion parameters of the steered axle (102, 104) comprise a torque, a force, a longitudinal slip, and/or a steering angle of the steered axle (102, 104).

Example 12: A vehicle (100) comprising the computer system (122, 126, 400) of any preceding example.

Example 13: A computer-implemented method (300) for determining a longitudinal slip limit for a steered axle (102, 104) of a vehicle (100) having two steered axles (102, 104), the computer-implemented method (300) comprising: acquiring (302), by processing circuitry (124, 128, 402) of a computer system (122, 126, 400), a reference body slip for a steered axle (102, 104) of the vehicle (100); acquiring (304), by the processing circuitry (124, 128, 402), a current body slip for the steered axle (102, 104); determining (306), by the processing circuitry (124, 128, 402), a first difference between the reference body slip and the current body slip; acquiring (308), by the processing circuitry (124, 128, 402), an initial longitudinal slip limit for the steered axle (102, 104); and determining (310), by the processing circuitry (124, 128, 402), an adjusted longitudinal slip limit for the steered axle (102, 104) based on the first difference and the initial longitudinal slip limit for the steered axle (102, 104).

Example 14: The computer-implemented method (300) of example 13, wherein the steered axle (102, 104) is a front steered axle (102) or a rear steered axle (104) of the vehicle (100).

Example 15: The computer-implemented method (300) of example 13 or 14, comprising acquiring (302), by the processing circuitry (124, 128, 402), the reference body slip for the steered axle (102, 104) by determining a reference body slip for the vehicle (100) using a bicycle model.

Example 16: The computer-implemented method (300) of any of examples 13 to 15, comprising acquiring (302), by the processing circuitry (124, 128, 402), the reference body slip for a steered axle (102, 104) according to:

$$\beta_{ref,f/r} = \beta_{ref} + \frac{L_{f/r}\omega_z}{v_x}$$

where $\beta_{ref,f}$ is the reference body slip for the front steered axle (102), $\beta_{ref,r}$ is the reference body slip for the rear steered axle (104), $\beta_{ref}$ is the reference body slip for the vehicle (100), $L_f$ is the distance from the centre of gravity of the vehicle (100) to the front steered axle (102), $L_r$ is the distance from the centre of gravity of the vehicle (100) to the rear steered

axle (104), $\omega_z$ is the yaw rate of the vehicle (100), and $v_x$ is the longitudinal velocity of the vehicle (100).

Example 17: The computer-implemented method (300) of any of examples 13 to 16, comprising acquiring (304), by the processing circuitry (124, 128, 402), the current body slip for the steered axle (102, 104) based on a current body slip for the vehicle (100), a distance from the centre of gravity of the vehicle (100) to the steered axle (102, 104), a current yaw rate of the vehicle (100), and a current longitudinal velocity of the vehicle (100).

Example 18: The computer-implemented method (300) of any of examples 13 to 17, wherein the initial longitudinal slip limit for the steered axle (102, 104) is based on a surface friction and/or one or more tyre properties of the steered axle (102, 104).

Example 19: The computer-implemented method (300) of any of examples 13 to 18, comprising determining (310), by the processing circuitry (124, 128, 402), the adjusted longitudinal slip limit for the steered axle (102, 104) based on a second difference between the initial longitudinal slip limit and a multiple of the magnitude of the first difference.

Example 20: The computer-implemented method (300) of example 19, comprising determining, by the processing circuitry (124, 128, 402), a maximum adjusted longitudinal slip limit for the steered axle (102, 104) based on a second difference between a maximum initial longitudinal slip limit and a multiple of the magnitude of the first difference.

Example 21: The computer-implemented method (300) of example 19 or 20, comprising determining, by the processing circuitry (124, 128, 402), a minimum adjusted longitudinal slip limit for the steered axle (102, 104) based on a second difference between a minimum initial longitudinal slip limit and a multiple of the magnitude of the first difference.

Example 22: The computer-implemented method (300) of any of examples 13 to 21, comprising transmitting (312), by the processing circuitry (124, 128, 402), the adjusted longitudinal slip limit to a controller (122, 126) of the vehicle (100) for use in controlling one or more motion parameters of at least one steered axle (102, 104) of the vehicle (100), such that an implemented longitudinal slip adheres to the adjusted longitudinal slip limit.

Example 23: The computer-implemented method (300) of example 22, wherein the one or more motion parameters of the steered axle (102, 104) comprise a torque, a force, a longitudinal slip, and/or a steering angle of the steered axle (102, 104).

Example 24: A computer program product comprising program code for performing, when executed by processing circuitry (124, 128, 402), the computer-implemented method (300) of any of examples 13 to 23.

Example 25: A non-transitory computer-readable storage medium comprising instructions, which when executed by processing circuitry (124, 128, 402), cause the processing circuitry to perform the computer-implemented method (300) of any of examples 13 to 23.

Terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1.  A computer system (122, 126, 400) for determining a longitudinal slip limit for a steered axle (102, 104) of a vehicle (100) having two steered axles (102, 104), the computer system (122, 126, 400) comprising processing circuitry (124, 128, 402) configured to:

    acquire a reference body slip for a steered axle (102, 104) of the vehicle (100);
    acquire a current body slip for the steered axle (102, 104);
    determine a first difference between the reference body slip and the current body slip;
    acquire an initial longitudinal slip limit for the steered axle (102, 104); and
    determine an adjusted longitudinal slip limit for the steered axle (102, 104) based on the first difference and the initial longitudinal slip limit for the steered axle (102, 104).

2.  The computer system (122, 126, 400) of claim 1, wherein the steered axle (102, 104) is a front steered axle (102) or a rear steered axle (104) of the vehicle (100).

3.  The computer system (122, 126, 400) of claim 1 or 2, wherein the processing circuitry (124, 128, 402) is configured to acquire the reference body slip for the steered axle (102, 104) by determining a reference body slip for the vehicle (100) using a bicycle model.

4.  The computer system (122, 126, 400) of any preceding claim, wherein the processing circuitry (124, 128, 402) is configured to acquire the reference body slip for a steered axle (102, 104) according to:

$$\beta_{ref,f/r} = \beta_{ref} + \frac{L_{f/r}\omega_z}{v_x}$$

    where $\beta_{ref,f}$ is the reference body slip for a front steered axle (102), $\beta_{ref,r}$ is the reference body slip for a rear steered axle (104), $\beta_{ref}$ is the reference body slip for the vehicle (100), $L_f$ is the distance from the centre of gravity of the vehicle (100) to the front steered axle (102), $L_r$ is the distance from the centre of gravity of the vehicle (100) to the rear steered axle (104), $\omega_z$ is the yaw rate of the vehicle (100), and $v_x$ is the longitudinal velocity of the vehicle (100).

5.  The computer system (122, 126, 400) of any preceding claim, wherein the processing circuitry (124, 128, 402) is configured to acquire the current body slip for the steered axle (102, 104) based on a current body slip for the vehicle (100), a distance from the centre of gravity of the vehicle (100) to the steered axle (102, 104), a current yaw rate of the vehicle (100), and a current longitudinal velocity of the vehicle (100).

6.  The computer system (122, 126, 400) of any preceding claim, wherein the initial longitudinal slip limit for the steered axle (102, 104) is based on a surface friction and/or one or more tyre properties of the steered axle (102, 104).

7.  The computer system (122, 126, 400) of any preceding claim, wherein the processing circuitry (124, 128, 402) is configured to determine the adjusted longitudinal slip limit for the steered axle (102, 104) based on a second difference between the initial longitudinal slip limit and a multiple of the magnitude of the first difference.

8.  The computer system (122, 126, 400) of claim 7, wherein the processing circuitry (124, 128, 402) is configured to determine a maximum adjusted longitudinal slip limit for the steered axle (102, 104) based on a second difference between a maximum initial longitudinal slip limit and a multiple of the magnitude of the first difference.

9.  The computer system (122, 126, 400) of claim 7 or 8, wherein the processing circuitry (124, 128, 402) is configured to determine a minimum adjusted longitudinal slip limit for the steered axle (102, 104) based on a second difference between a minimum initial longitudinal slip limit and a multiple of the magnitude of the first difference.

10. The computer system (122, 126, 400) of any preceding claim, wherein the processing circuitry (124, 128, 402) is configured to transmit the adjusted longitudinal slip limit to a controller (122, 126) of the vehicle (100) for use in controlling one or more motion parameters of at least one steered axle (102, 104) of the vehicle (100), such that an implemented longitudinal slip adheres to the adjusted longitudinal slip limit.

11. The computer system (122, 126, 400) of claim 10, wherein the one or more motion parameters of the steered axle (102, 104) comprise a torque, a force, a longitudinal slip, and/or a steering angle of the steered axle (102, 104).

12. A vehicle (100) comprising the computer system (122, 126, 400) of any preceding claim.

13. A computer-implemented method (300) for determining a longitudinal slip limit for a steered axle (102, 104) of a vehicle (100) having two steered axles (102, 104), the computer-implemented method (300) comprising:

acquiring (302), by processing circuitry (124, 128, 402) of a computer system (122, 126, 400), a reference body slip for a steered axle (102, 104) of the vehicle (100);
acquiring (304), by the processing circuitry (124, 128, 402), a current body slip for the steered axle (102, 104);
determining (306), by the processing circuitry (124, 128, 402), a first difference between the reference body slip and the current body slip;
acquiring (308), by the processing circuitry (124, 128, 402), an initial longitudinal slip limit for the steered axle (102, 104); and
determining (310), by the processing circuitry (124, 128, 402), an adjusted longitudinal slip limit for the steered axle (102, 104) based on the first difference and the initial longitudinal slip limit for the steered axle (102, 104).

14. A computer program product comprising program code for performing, when executed by processing circuitry (124, 128, 402), the computer-implemented method (300) of claim 13.

15. A non-transitory computer-readable storage medium comprising instructions, which when executed by processing circuitry (124, 128, 402), cause the processing circuitry to perform the computer-implemented method (300) of claim 13.

**FIG. 1**

**FIG. 2**

<u>300</u>

```
┌─────────────────────────────────────────────────────┐
│ Acquiring a reference body slip angle for the steered axle │ ──── 302
└─────────────────────────────────────────────────────┘
                          ↓
┌─────────────────────────────────────────────────────┐
│ Acquiring a current body slip angle for the steered axle  │ ──── 304
└─────────────────────────────────────────────────────┘
                          ↓
┌─────────────────────────────────────────────────────┐
│ Determining a difference between the reference body slip  │
│        angle and the current body slip angle              │ ──── 306
└─────────────────────────────────────────────────────┘
                          ↓
┌─────────────────────────────────────────────────────┐
│ Acquiring an initial longitudinal slip limit for the axle │ ──── 308
└─────────────────────────────────────────────────────┘
                          ↓
┌─────────────────────────────────────────────────────┐
│ Determining an adjusted longitudinal slip limit for the   │
│                   steered axle                            │ ──── 310
└─────────────────────────────────────────────────────┘
                          ↓
┌─ ─ ─ ─ ─ ─ ─ ─ ─ ─ ─ ─ ─ ─ ─ ─ ─ ─ ─ ─ ─ ─ ─ ─ ─ ─ ─┐
│ Transmitting the adjusted longitudinal slip limit to a    │
│               controller of the vehicle                   │ ──── 312
└─ ─ ─ ─ ─ ─ ─ ─ ─ ─ ─ ─ ─ ─ ─ ─ ─ ─ ─ ─ ─ ─ ─ ─ ─ ─ ─┘
```

**FIG. 3**

**FIG. 4**

## EUROPEAN SEARCH REPORT

Application Number

EP 24 19 4783

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 089 680 A (YOSHIOKA TOHRU [JP] ET AL) 18 July 2000 (2000-07-18) | 1,2,6-8, 12-15 | INV. B60W30/045 |
| Y | * column 12, line 14 - line 43 * <br> * column 13, line 18 - line 26; claim 1; figure 11 * | 3-5 | B60W30/18 <br> B60W40/103 <br> B62D7/15 |
| | ----- | | |
| Y | KUN ET AL: "Real-time estimation and diagnosis of vehicle's dynamics states with low-cost sensors in different driving condition", <br> THÈSE, UNIVERSITÉ DE TECHNOLOGIE DE COMPIÈGNE, FR, PAGE(S) 1 - 174 <br><br> , <br> 8 September 2016 (2016-09-08), <br> XP009547574, <br> Retrieved from the Internet: <br> URL:https://theses.hal.science/tel-0141766 <br> 0 <br> * 2.4.2.2 * | 3-5 | |
| | ----- | | |
| A | US 2005/234621 A1 (LIN WILLIAM C [US] ET AL) 20 October 2005 (2005-10-20) <br> * paragraphs [0039], [0048]; claim 1; figures 1,8 * | 1-15 | **TECHNICAL FIELDS SEARCHED (IPC)** <br><br> B60W <br> B62D |
| | ----- | | |

The present search report has been drawn up for all claims

| Place of search | Date of completion of the search | Examiner |
|---|---|---|
| Munich | 17 January 2025 | Rameau, Pascal |

EPO FORM 1503 03.82 (P04C01)

## ANNEX TO THE EUROPEAN SEARCH REPORT
## ON EUROPEAN PATENT APPLICATION NO.

EP 24 19 4783

This annex lists the patent family members relating to the patent documents cited in the above-mentioned European search report.
The members are as contained in the European Patent Office EDP file on
The European Patent Office is in no way liable for these particulars which are merely given for the purpose of information.

17-01-2025

| Patent document cited in search report | | Publication date | Patent family member(s) | | Publication date |
|---|---|---|---|---|---|
| US 6089680 | A | 18-07-2000 | DE | 19813736 A1 | 15-10-1998 |
| | | | JP | H10264798 A | 06-10-1998 |
| | | | KR | 19980080743 A | 25-11-1998 |
| | | | US | 6089680 A | 18-07-2000 |
| US 2005234621 | A1 | 20-10-2005 | DE | 102005018069 A1 | 24-11-2005 |
| | | | US | 2005234621 A1 | 20-10-2005 |

EPO FORM P0459

For more details about this annex : see Official Journal of the European Patent Office, No. 12/82